# EUROPEAN PATENT APPLICATION

(11) **EP 1 511 100 A2**
(43) Date of publication of application: **02.03.2005**
(21) Application number: 04020278.0
(22) Date of filing: 26.08.2004
(51) Int. Cl.: H01M 4/48, H01M 4/66

(54) **Negative electrode for non-aqueous electrolyte secondary battery, production method thereof and non-aqueous electrolyte secondary battery**

(30) Priority: 28.08.2003 JP 2003305348
(71) Applicant: MATSUSHITA ELECTRIC INDUSTRIAL CO., LTD., Kadoma-shi, Osaka 571-8501 (JP)
(72) Inventor: Koshina, Hizuru, Neyagawa-shi Osaka 572-0019 (JP); Nakanishi, Shinji, Hirakata-shi Osaka 573-1106 (JP)
(74) Representative: Patentanwälte Leinweber & Zimmermann

(57) **Abstract**

A negative electrode capable of giving a non-aqueous electrolyte secondary battery which has high capacity, long cycle life and excellent safety, and exhibits an excellent cycle characteristic even when charging/deep-discharging are repeated. The negative electrode comprises a current collector sheet and an active material layer deposited on the surface of the current collector sheet, wherein the active material layer comprises SiOₓ satisfying: 0.7 ≦ x ≦ 1.3, and does not include a binder.
The current collector sheet may comprise a resin core layer and a metal layer coating the surface of said resin core layer.

## Description

### BACKGROUND OF THE INVENTION

The present invention relates to a non-aqueous electrolyte secondary battery, and particularly to a negative electrode for use in a non-aqueous electrolyte secondary battery and a method for producing the same.

In recent years, information electronic devices, such as personal computers, cell phones and personal digital assistances (PDA), as well as audio-visual electronic devices, such as video camcoders and mini-disc players, are rapidly becoming downsized, lightweight and cordless. As power sources for driving these electronic devices, secondary batteries having high energy density are in increasingly high demand. Therefore, non-aqueous electrolyte secondary batteries, having higher energy density than reachable by conventional lead-acid batteries, nickel-cadmium storage batteries and nickel-metal hydride storage batteries, are becoming mainstream. Among non-aqueous electrolyte secondary batteries, lithium-ion secondary batteries and lithium-ion polymer secondary batteries are under advanced development.

As a non-aqueous electrolyte normally selected is one capable of enduring an oxidation atmosphere of a positive electrode that discharges at a high potential of 3.5 to 4.0 V and also capable of enduring a reduction atmosphere of a negative electrode that charges and discharges at a potential close to lithium. The currently mainstream non-aqueous electrolyte is one obtained by dissolving lithium hexafluoro phosphate (LiPF₆) in a mixed solvent of ethylene carbonate (EC) having a high dielectric constant and linear carbonate as a low-viscosity solvent. As the linear carbonate used is one or more of diethyl carbonate (DEC), dimethyl carbonate (DMC), ethyl methyl carbonate (EMC) and the like. For polymer secondary batteries, gel electrolytes comprising these non-aqueous electrolytes retained in polymer elements as plasticizers, and other electrolytes, have been used.

As a positive electrode active material of a non-aqueous electrolyte secondary battery, a transition metal oxide, with an average discharge potential in the range of 3.5 to 4.0 V with respect to lithium metal, has mainly been employed. As the transition metal oxide, lithium cobalt oxide (LiCoO₂), lithium nickel oxide (LiNiO₂), lithium manganese oxide (LiMn₂O₄), a solid solution material (LiCoₓNi_{y}Mn_{z}O₂, Li (CoₐNi_{b}Mn_{c})₂O₄) with a plurality of transition metals introduced thereto, and the like, have been used. The positive electrode active material is mixed with a conductive agent, a binder and the like to be used as a positive electrode material mixture. The positive electrode material mixture is applied on a current collector sheet made of an aluminum foil or is compression-molded on a sealing plate or in a case, which are made of titanium or stainless steel, to produce a positive electrode.

For a negative electrode mainly used has been a carbon material capable of absorbing and desorbing lithium. The carbon material may be exemplified by artificial graphite, natural graphite, baked mesophase carbons made from coal pitch or petroleum pitch, non-graphitizable carbons made by further baking those baked carbons in the presence of oxygen, and non-graphitizable carbons comprising baked bodies of oxygen-containing plastics. The carbon material is mixed with a binder and the like to be used as a negative electrode material mixture. The negative electrode material mixture is applied on a current collector sheet made of a copper foil or compression-molded on a sealing plate or in a case, which are made of iron or nickel, to produce a negative electrode.

When a graphite material is used for the negative electrode, lithium is released from the graphite material at an average potential of about 0.2 V. Since this potential is low compared to the case of using non-graphitizable carbon, the graphite carbon has been used in fields where high voltage and voltage flatness are desired. However, the capacity per unit volume of the graphite material is as small as 838 mAh/cm³, and this capacity cannot be expected to further increase.

On the other hand, as a negative electrode material showing high capacity, promising materials include simple substances such as silicon and tin and oxides of those substances, which are capable of absorbing and desorbing lithium (cf. Japanese Laid-Open Patent Publication No. 2001-220124).

A silicon oxide is expressed by the chemical formula: SiOₓ, and the capacity for absorbing and desorbing lithium varies depending on the x value. SiOₓ is an amorphous material and has a nonstoichiometric composition. The x value therefore varies successively. Typically, the x value is determined as an average value of an atomic ratio of O to Si by the fundamental parameter method, using fluorescent X-ray diffraction.

However, when each of these materials absorbs lithium, the crystal structure thereof varies and the volume thereof expands. This may result in cracking of a particle, separation of a particle from the current collector, or the like, and these materials therefore have the drawback of having short charge/discharge cycle life. In particular, the cracking of the particle causes an increase in reaction between the non-aqueous electrolyte and the active material, to form a film on the particle. Thereby, an interface resistance increases to primarily cause shorter charge/discharge cycle life.

In the case of using a battery case with low strength, such as a prismatic case made of aluminum or iron, or an exterior component which is made of an aluminum foil having a resin film on each face thereof (aluminum laminate sheet), the battery thickness increases due to volume expansion of the negative electrode, whereby an instrument storing the battery could be damaged. In a cylindrical battery using a battery case with high strength, since a separator between a positive electrode and a negative electrode is strongly compressed due to volume expansion of the negative electrode, an electrolyte-depleting portion is created between the positive electrode and the negative electrode, thereby making the battery life even shorter.

Expansion per volume of the negative electrode can be reduced by blending nickel silicide (NiSi₂), zinc, cadmium or the like, which are capable of absorbing a zero or small amount of lithium, into a material capable of absorbing lithium. However, such blending is not effective as a measure against capacity increase because an amount of lithium to be absorbed in the entire electrode plate, i.e. charging capability, decreases.

There further is a problem that, when the entire negative electrode expands due to volume expansion or cracking of the particles, battery internal pressure increases to impair safety. Against a nail penetration test, safety can be enhanced to a certain extent by the use of a current collector sheet comprising a resin core layer and a metal layer coating the surface of the resin core layer; however, when the battery internal pressure increases, securement of safety becomes difficult. Moreover, when a combustible carbon material is used as a negative electrode material, improvement in safety is limited.

As a method for producing a negative electrode using a silicon oxide, there has been known a method which comprises: mixing a silicon oxide, a binder and a liquid ingredient to prepare a paste, and applying the obtained paste on a core sheet and then drying it (Japanese Laid-Open Patent Publication No. 2002-260651). However, this method still has a problem that an electrode plate deteriorates due to variations in active material volume associated with charging/discharging, and a cycle characteristic is insufficient.

Further, there has been reported a negative electrode comprising a first layer mainly composed of carbon and a second layer, which comprises a silicon oxide and is formed on the first layer by vapor deposition, CVD or spattering (Japanese Patent No. 3520921). Here, as SiOₓ, compositions close to a composition in the case of x = 2 have been considered.

The problem of volume expansion of a negative electrode in charging/discharging as thus described is more serious when the battery is subjected to deep discharge. In the following, deep discharge will be described:

In many cases, a battery remains set in a device and stood still for a long period of time without being charged. However, even when the device is not in use, a minute amount of current flows in the battery being set in the device. When the device is stood still for a long period of time, therefore, a battery could be discharged to a level equivalent to or below a typical discharge terminal potential. What has been desired in the market is that, even in such a deeply discharged state, the device normally activates when in use.

### BRIEF SUMMARY OF THE INVENTION

Accordingly, it is an object of the present invention to provide a negative electrode capable of giving a non-aqueous electrolyte secondary battery that has high capacity, long cycle life and excellent safety, and exhibits an excellent cycle characteristic even in the case of repeating charging/deep-discharging.

The present invention was accomplished after finding that the use of a silicon oxide with the x value around 1 enables fabrication of a battery capable of maintaining an excellent cycle characteristic even when charging/deep-discharging are repeated.

The present invention relates to a negative electrode for a non-aqueous electrolyte secondary battery, comprising a current collector sheet and an active material layer deposited on the surface of the current collector sheet, wherein the active material layer comprises SiOₓ satisfying: 0.7 ≦ x ≦ 1.3, and does not include a binder. For the current collector sheet, a metal foil can be used. A current collector sheet which comprises a resin core layer and a metal layer coating the surface of the resin core layer can also be used.

The surface of the metal foil can be coated with a layer comprising a carbon material. The carbon material is, for example, carbon black or graphite.

It is preferable that the aforesaid metal for the current collector sheet be at least one selected from the group consisting of gold, silver, copper, iron, nickel, zinc and aluminum.

It is preferable that the resin core layer comprise at least one selected from the group consisting of polyethylene terephthalate, polycarbonate, an aramid resin, a polyimide resin, a phenol resin, a polyether sulfone resin, a polyether ether ketone resin and a polyamide resin.

It is preferable that the active material layer have a thickness of not smaller than 0.5 *µ*m and not larger than 20 *µ*m.

The present invention also relates to a secondary battery comprising the aforesaid negative electrode, a positive electrode, and a non-aqueous electrolyte.

The present invention further relates to a method for producing a negative electrode for a non-aqueous electrolyte secondary battery, including the step of depositing SiOₓ that satisfies: 0.7 ≦ x ≦ 1.3, on a current collector sheet by vapor deposition, to form an active material layer.

A negative electrode, obtained by depositing an active material layer comprising silicon monoxide, SiOₓ (0.7 ≦ x ≦ 1.3) and including no binder on a current collector sheet, expands and shrinks associated with charging/discharging in a small degree, compared to a negative electrode obtained by applying a mixture including a silicon oxide and a binder on a current collector sheet, and hence deterioration in current collectivity due to cracking of a particle or the like can be suppressed. Therefore, in addition to having high capacity, the negative electrode is effectively prevented from having lower charge/discharge cycle life, especially lower cycle life in the case of repeating charging/deep-discharging. Further, because the negative electrode is prevented from expanding, battery internal pressure is resistant to increasing, so as to improve safety.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE SEVERAL VIEWS OF THE DRAWING

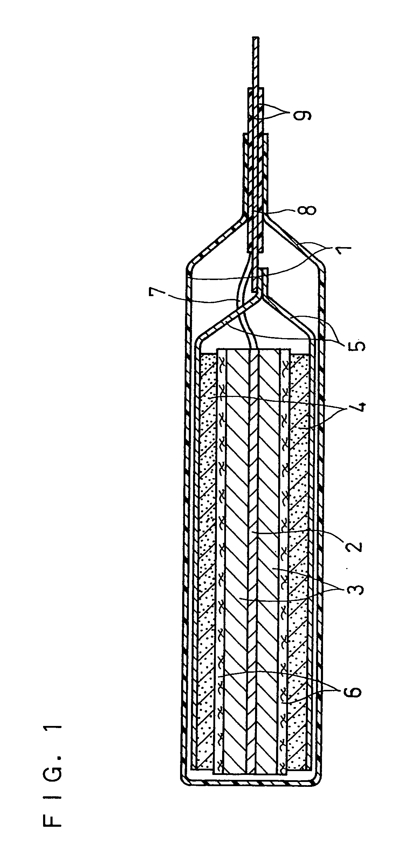

FIG. 1 is a vertical sectional view of one example of a non-aqueous electrolyte secondary battery in accordance with the present invention.

### DETAILED DESCRIPTION OF THE INVENTION

The present invention relates to a negative electrode for a non-aqueous electrolyte secondary battery, comprising a current collector sheet and an active material layer deposited on the surface of the current collector sheet, wherein the active material layer comprises SiOₓ (0.7 ≦ x ≦ 1.3). The active material layer in accordance with the present invention does not include a binder. Such an active material layer can be formed by directly depositing silicon monoxide, SiOₓ (0.7 ≦ x ≦ 1.3), on the current collector sheet.

The thickness of the active material layer comprising silicon monoxide, SiOₓ (0.7 ≦ x ≦ 1.3), is preferably not larger than 20 *µ*m, and more preferably not larger than 10 *µ*m. Further, considering the energy density of the battery, the thickness of the active material layer is preferably not smaller than 0.5 *µ*m. However, when the thickness is smaller than 0.5 *µ*m, charge/discharge efficiency can be kept high, and it is thereby possible, so long as in the field requiring no large increase in energy density, to fabricate a sufficiently practical battery, even using an active material layer having a thickness smaller than 0.5 *µ*m.

The method for directly depositing silicon monoxide, SiOₓ (0.7 ≦ x ≦ 1.3), on a current collector sheet may be exemplified by vapor deposition, sputtering and electrochemical methods, and among them, vapor deposition is preferably applied to the deposition of silicon monoxide. Conditions for the vapor deposition may be selected according to a desired thickness of the active material layer, a material for the current collector sheet, and the like.

For the current collector sheet, a metal foil with a thickness of 0.1 to 100 *µ*m can for example be used. The metal foil may be three-dimensionally processed or be provided with holes therein. Further, for the purpose of enhancing conductivity of the negative electrode, the surface of the metal foil may be coated with a layer comprising a carbon material.

When the surface of the metal foil is coated with the layer comprising a carbon material, conductivity of the negative electrode improves; besides, because the surface of the layer comprising a carbon material is more irregular than the surface of the metal foil, the bonding strength of the deposited film to the metal foil improves even when the active material layer repeatedly expands and shrinks. As a result, a cycle characteristic improves above all.

The layer comprising a carbon material is hereinafter referred to as carbon layer. The carbon material in the carbon layer may be exemplified by acetylene black (hereinafter referred to as AB), ketjen black and graphitized VGCF (a material obtained by graphitizing vapor-phase growth carbon fiber), which have been used as conductive agents in conventional lithium batteries and the like. Moreover, such a carbon material as graphite, which has been used for a negative electrode of a conventional lithium battery, may be used. Especially when graphite or the like is used, it also brings about a reaction of absorbing and desorbing lithium, thereby improving capacity more than in the case of using the conductive material.

In using the conductive material, the thickness of the carbon layer is desirably not larger than 5 *µ*m. Although the battery activates without any trouble even when the carbon layer thickness is larger than 5 *µ*m, a charge/discharge capacity per volume of the battery is so small as to be practically disadvantageous. On the other hand, how thin the carbon layer is should cause no problem.

When a carbon material capable of absorbing and desorbing lithium is used to achieve high capacity, the thickness of the carbon layer is desirably not larger than 5 *µ*m. In the case where the capacity is not required to be sufficiently high, the thickness of the carbon layer may be made larger than 5 *µ*m or about the same as the thickness of the silicon monoxide layer.

Although it is preferable that the metal foil comprise a transition metal resistant to being alloyed with lithium, such as gold, copper or iron, when a negative electrode potential versus a potential of lithium metal is not less than 0.4 V in charging, a metal foil comprising aluminum, silver or the like can be used. When the negative electrode potential versus the potential of lithium metal is below 0.4 V, aluminum or silver may be alloyed with lithium to be powdered, causing a decrease in electronic conductivity. It is to be noted that an alloy comprising at least one selected from the group consisting of gold, silver, copper, iron, nickel, zinc and aluminum can also be used.

A current collector sheet, comprising a resin core layer and a metal layer covering the surface of the resin core layer, can also be used. In the case of using such a current collector sheet, since the current collector sheet has a slightly irregular surface, the contact property between silicon monoxide and the metal layer is good enough to further reduce electric resistance and to significantly improve safety. The thickness of the resin core layer is favorably from 3 to 100 *µ*m, and more preferably from 3 to 20 *µ*m. Although the thickness of the metal layer covering the surface of the resin core layer is preferably from 0.1 to 20 *µ*m, it has no limitation so long as being in the range not exceeding the thickness of the resin core layer. The resin core layer preferably has tensile strength of not less than 20 MPa.

For the resin core layer used can be polyethylene terephthalate, polycarbonate, an aramid resin, a polyimide resin, a phenol resin, a polyether sulfone resin, a polyether ether ketone resin or a polyamide resin. From the viewpoint of obtaining a resin core layer having high strength, it is preferable that a plurality of resin films be laminated or a filler be contained in the resin.

The non-aqueous electrolyte secondary battery of the present invention can be fabricated in the same manner as conventionally done except for the use of the aforesaid negative electrode. Therefore, a positive electrode and a non-aqueous electrolyte which have conventionally been used for non-aqueous electrolyte secondary batteries can be employed, without any particular restriction, for the positive electrode and the non-aqueous electrolyte to be combined with the aforesaid negative electrode.

The present invention can be applied to any forms of batteries including cylindrical, prismatic, laminate-sheet-package type and coin type batteries. Modes of a positive electrode and a negative electrode may be altered according to a battery type.

In the following, the present invention will be specifically described based on examples of the present invention; however the present invention is not limited to these examples.

### Example 1

FIG. 1 shows a vertical sectional view of a non-aqueous electrolyte secondary battery fabricated in Example 1. This battery was fabricated as follows:

### (i) Production of positive electrode

100 parts by weight of lithium cobaltate (LiCoO₂) as an active material was mixed with 3 parts by weight of acetylene black as a conductive agent, and a solution of N-methyl-2-pyrrolidone (NMP) dissolving 4 parts by weight of polyvinylidene fluoride (PVdF) as a binder was added into the resultant mixture and kneaded with the same to obtain a paste-like positive electrode material mixture. The obtained positive electrode material mixture was applied on one face of a current collector sheet 5 made of an aluminum foil with a thickness of 15 *µ*m, which was dried and rolled by pressure to form a positive electrode active material layer 4. Subsequently, the current collector sheet with the active material layer carried thereon was cut into the material mixture area of 35 × 35 mm, and a positive electrode lead 8 was connected to a lead-contacting portion where the aluminum foil exposed, to obtain a positive electrode. The active material layer had a thickness of 65 *µ*m. The positive electrode had an electric capacity of 73.5 mAh when a capacity per unit weight of LiCoO₂ was 155 mAh/g.

### (ii) Production of negative electrode

A current collector sheet 2 made of a copper foil with a length of 50 mm, a width of 50 mm and a thickness of 10 *µ*m was prepared and set on a substrate of a vacuum heated vapor deposition device, ED-1500, manufactured by SANVAC Corporation. The device was set to have a vacuum of 1 × 10⁻⁴ Torr inside the chamber. Subsequently, a silicon monoxide (SiO) powder (SIO05BP, purity of 4N), produced by Kojundo Chemical Laboratory Co.,Ltd., was vapor deposited several times under conditions of a vapor deposition rate of 0.7 to 0.9 nm/second and a successive vapor deposition time of 1 hour, until a silicon monoxide (SiOₓ, x = 1) film 3 with a thickness of 20 *µ*m was obtained. The temperature of the substrate, on which the copper foil was placed, was controlled by cooling so as not to be 200°C or higher. In the same practice as above, a silicon monoxide film with a thickness of 20 *µ*m was placed on the back surface of the copper foil.

A polyimide tape was attached on the lead-contacting portion before the vapor deposition of silicon monoxide, and peeled off after the vapor deposition. A negative electrode lead 7 made of nickel was connected to a section where the copper foil exposed, and this connection was fixed by attachment of a polypropylene-made tape over the lead. The copper foil with silicon monoxide deposited thereon was cut such that the silicon-monoxide-deposited portion had an area of 37 × 37 mm to give a negative electrode. When the capacity per unit weight of silicon monoxide was 1200 mAh/g, the negative electrode had an electric capacity of about 82.1 mAh. However, a portion facing the positive electrode had a capacity of 73.5 mAh.

As a method for depositing silicon monoxide, vacuum heated vapor deposition was introduced this time; however, the similar film formation can be carried out using a block-like silicon monoxide target by means of a sputter device. Further, by using a mixture of Si and SiO₂ as a source for silicon monoxide, a deposition film can be obtained which comprises silicon monoxide containing other elements than SiO in an amount not more than 10%.

### (iii) Fabrication of battery

The positive electrodes and the negative electrode were placed upon each other via a separator 6 comprising a polypropylene-made microporous film (#2500) with a thickness of 25 *µ*m, manufactured by Celgard Inc., to constitute an electrode assembly. Each end of the positive electrode active material layer was 1.0 mm inner than each corresponding end of the negative electrode active material layer. Subsequently, the electrode assembly was dried in a vacuum drier at 60°C for 12 hours to reduce water content in the electrode assembly to 50 ppm or lower.

The dried electrode assembly was housed in an exterior component 1 comprising a laminate sheet (thickness of 50 *µ*m). As the laminate sheet used was an aluminum foil having a denatured polyethylene resin film on each side thereof. After a non-aqueous electrolyte was poured in vacuo into the exterior component, respective pulled-out portions of the negative electrode lead 7 and the positive electrode lead 8 were sealed with a resin 9 to complete a battery.

The non-aqueous electrolyte used was obtained by dissolving LiPF₆ at a concentration of 1 mol/L in a mixed solvent of ethylene carbonate (EC) and ethyl methyl carbonate (EMC) in a volume ratio of 1:3.

The dimensions of the obtained battery were a width of 40 mm, a total height of 40 mm and a thickness of 0.5 mm. At an ambient temperature of 20°C, this battery was charged at a constant current of 7.2 mA until the battery voltage reached 4.2 V, and stood still for 20 minutes, whereafter the battery was discharged at a discharge current of 7.2 mA until the battery voltage became 3.0 V, and this pattern of charging/discharging was repeated twice. Finally, the battery was charged at a charge current of 7.2 mA until the battery voltage reached 4.2 V. This battery was referred to as Battery of Example 1.

### Example 2

A negative electrode was obtained in the same manner as in Example 1 except that the thickness of the silicon monoxide film was made 10 *µ*m by reducing the number of vapor deposition. Further, in order to render a positive electrode capacity consistent with a negative electrode capacity, the thickness of the positive electrode active material layer and the active material weight were changed to half of those in Example 1. These positive electrodes and negative electrode were used to fabricate a battery in the same manner as in Example 1. This battery was referred to as Battery of Example 2.

### Example 3

A negative electrode was obtained in the same manner as in Example 1 except that the thickness of the silicon monoxide film was made 5 *µ*m by reducing the number of vapor deposition. Further, in order to render a positive electrode capacity consistent with a negative electrode capacity, the thickness of the positive electrode active material layer and the active material weight were changed to a quarter of those in Example 1. These positive electrodes and negative electrode were used to fabricate a battery in the same manner as in Example 1. This battery was referred to as Battery of Example 3.

### Example 4

A negative electrode was obtained in the same manner as in Example 1 except that the thickness of the silicon monoxide film was made 3 *µ*m by reducing the number of vapor deposition. Further, in order to render a positive electrode capacity consistent with a negative electrode capacity, the thickness of the positive electrode active material layer and the active material weight were changed to about 15% of those in Example 1. These positive electrodes and negative electrode were used to fabricate a battery in the same manner as in Example 1. This battery was referred to as Battery of Example 4.

### Example 5

A negative electrode was obtained in the same manner as in Example 1 except that the thickness of the silicon monoxide film was made 0.5 *µ*m by reducing the number of vapor deposition. Further, in order to render a positive electrode capacity consistent with a negative electrode capacity, the thickness of the positive electrode active material layer and the active material weight were changed to about one fortieth (1/40) of those in Example 1. These positive electrodes and negative electrode were used to fabricate a battery in the same manner as in Example 1. This battery was referred to as Battery of Example 5.

### Example 6

A negative electrode was obtained in the same manner as in Example 1 except that the thickness of the silicon monoxide film was made 10 *µ*m by reducing the number of vapor deposition, and that a nickel foil with a thickness of 10 *µ*m was used in place of the copper foil. Further, in order to render a positive electrode capacity consistent with a negative electrode capacity, the thickness of the positive electrode active material layer and the active material weight were changed to half of those in Example 1. These positive electrodes and negative electrode were used to fabricate a battery in the same manner as in Example 1. This battery was referred to as Battery of Example 6.

### Comparative Example 1

A solution of N-methyl-2-pyrrolidone (NMP) dissolving 4 parts by weight of polyvinylidene fluoride (PVdF) as a binder was kneaded with 100 parts by weight of a carbon material as an active material to obtain a paste-like negative electrode material mixture. The obtained negative electrode material mixture was applied on each face of a current collector sheet made of a copper foil with a thickness of 10 *µ*m, which was then dried at 60°C for 8 hours and rolled by pressure to form an active material layer. Subsequently, the current collector sheet with the active material layer placed thereon was cut, and a negative electrode lead was connected to a lead-contacting portion where the copper foil exposed, to obtain a negative electrode. An active material density filled in the active material layer was 1.2 g/cc and the negative electrode thickness was 110 *µ*m. The capacity of the carbon material per one-face unit area was 3 mAh. Except for the use of this negative electrode, a battery was fabricated in the same manner as in Example 1. This battery was referred to as Battery of Comparative Example 1.

### Comparative Example 2

A solution of N-methyl-2-pyrrolidone (NMP) dissolving 4 parts by weight of polyvinylidene fluoride (PVdF) as a binder was kneaded with 100 parts by weight of a silicon monoxide powder (SIO05BP, 90% particle size (D₉₀) of 75 *µ*m) as an active material, produced by Kojundo Chemical Laboratory Co.,Ltd, to obtain a paste-like negative electrode material mixture. The obtained negative electrode material mixture was applied on each face of a current collector sheet made of a copper foil with a thickness of 10 *µ*m, which was then dried at 60°C for 8 hours and rolled by pressure to form an active material layer. Subsequently, the current collector sheet with the active material layer placed thereon was cut, and a negative electrode lead was connected to a lead-contacting portion where the copper foil exposed, to obtain a negative electrode. The capacity per one-face unit area of silicon monoxide was made equivalent to that in Example 1. Except for the use of this negative electrode, a battery was fabricated in the same manner as in Example 1. This battery was referred to as Battery of Comparative Example 2.

### Example 7

A negative electrode was obtained in the same manner as in Example 1 except that the thickness of the silicon monoxide film was made 30 *µ*m by increasing the number of vapor deposition. Further, in order to render a positive electrode capacity consistent with a negative electrode capacity, the thickness of the positive electrode active material layer and the active material weight were changed to about one and a half times of those in Example 1. These positive electrodes and negative electrode were used to fabricate a battery in the same manner as in Example 1. This battery was referred to as Battery of Example 7.

### Example 8

A negative electrode was obtained in the same manner as in Example 1 except that the thickness of the silicon monoxide film was made 10 *µ*m and that an aluminum foil with a thickness of 10 *µ*m was used in place of the copper foil. Further, in order to render a positive electrode capacity consistent with a negative electrode capacity, the thickness of the positive electrode active material layer and the active material weight were changed to about half of those in Example 1. These positive electrodes and negative electrode were used to fabricate a battery in the same manner as in Example 1. This battery was referred to as Battery of Example 8.

### Example 9

A polyethylene terephthalate (PET) sheet with a length of 50 mm, a width of 50 mm and a thickness of 10 *µ*m was prepared as a resin core layer. On each face of this PET sheet, a vapor deposition film made of copper with a thickness of 2 *µ*m was formed. Conditions for vapor deposition were the same as in the case of forming silicon monoxide in Example 1, except that the target was changed to copper. Thereafter, the target was changed to the aforesaid silicon monoxide powder (purity of 4N), and a silicon monoxide film with a thickness of 20 *µ*m was formed by vapor deposition on each face of the sheet with copper deposition film formed thereon, in the same manner as in Example 1. In the vapor deposition of copper and silicon monoxide, the temperature of the substrate, on which the resin core layer was placed, was controlled by cooling so as to be kept below 100°C. Except for the use of this negative electrode, a battery was fabricated in the same manner as in Example 1. This battery was referred to as Battery of Example 9.

### Example 10

A negative electrode was obtained in the same manner as in Example 9 except that the thickness of the silicon monoxide film was made 10 *µ*m by reducing the number of vapor deposition. Further, in order to render a positive electrode capacity consistent with a negative electrode capacity, the thickness of the positive electrode active material layer and the active material weight were changed to half of those in Example 9. These positive electrodes and negative electrode were used to fabricate a battery in the same manner as in Example 1. This battery was referred to as Battery of Example 10.

### Example 11

A negative electrode was obtained in the same manner as in Example 9 except that the thickness of the silicon monoxide film was made 5 *µ*m by reducing the number of vapor deposition. Further, in order to render a positive electrode capacity consistent with a negative electrode capacity, the thickness of the positive electrode active material layer and the active material weight were changed to a quarter of those in Example 9. These positive electrodes and negative electrode were used to fabricate a battery in the same manner as in Example 1. This battery was referred to as Battery of Example 11.

### Example 12

A negative electrode was obtained in the same manner as in Example 9 except that the thickness of the silicon monoxide film was made 3 *µ*m by reducing the number of vapor deposition. Further, in order to render a positive electrode capacity consistent with a negative electrode capacity, the thickness of the positive electrode active material layer and the active material weight were changed to about 15% of those in Example 9. These positive electrodes and negative electrode were used to fabricate a battery in the same manner as in Example 1. This battery was referred to as Battery of Example 12.

### Example 13

A negative electrode was obtained in the same manner as in Example 9 except that the thickness of the silicon monoxide film was made 0.5 *µ*m by reducing the number of vapor deposition. Further, in order to render a positive electrode capacity consistent with a negative electrode capacity, the thickness of the positive electrode active material layer and the active material weight were changed to one fortieth (1/40) of those in Example 9. These positive electrodes and negative electrode were used to fabricate a battery in the same manner as in Example 1. This battery was referred to as Battery of Example 13.

### Example 14

A negative electrode was obtained in the same manner as in Example 9 except that a film made of nickel, in place of copper, having a thickness of 2*µ*m was vapor deposited on the resin core layer and that the thickness of the silicon monoxide film was made 10 *µ*m. Further, in order to render a positive electrode capacity consistent with a negative electrode capacity, the thickness of the positive electrode active material layer and the active material weight were changed to half of those in Example 9. These positive electrodes and negative electrode were used to fabricate a battery in the same manner as in Example 1. This battery was referred to as Battery of Example 14.

### Example 15

A negative electrode was obtained in the same manner as in Example 9 except that a polyimide sheet with a thickness of 10 *µ*m was used in place of the PET sheet, and that the thickness of the silicon monoxide film was made 10 *µ*m. Further, in order to render a positive electrode capacity consistent with a negative electrode capacity, the thickness of the positive electrode active material layer and the active material weight were changed to half of those in Example 9. These positive electrodes and negative electrode were used to fabricate a battery in the same manner as in Example 1. This battery was referred to as Battery of Example 15.

### Example 16

A negative electrode was obtained in the same manner as in Example 9 except a polypropylene sheet with a thickness of 10 *µ*m was used in place of the PET sheet and that the thickness of the silicon monoxide film was made 10 *µ*m. Further, in order to render a positive electrode capacity consistent with a negative electrode capacity, the thickness of the positive electrode active material layer and the active material weight were changed to half of those in Example 9. These positive electrodes and negative electrode were used to fabricate a battery in the same manner as in Example 1. This battery was referred to as Battery of Example 16.

### Example 17

First, a carbon layer was applied on each face of a copper core layer. Namely, a solution of NMP dissolving 10 parts by weight of polyvinylidene fluoride (PVdF) as a binder was kneaded with 100 parts by weight of AB, to give a carbon paste. This carbon paste was applied on each face of a current collector sheet made of a copper foil with a thickness of 10 *µ*m, which was then dried at 60°C for 8 hours and rolled by pressure to form a carbon layer with a thickness of 0.5 *µ*m.

On this sheet, a silicon monoxide film with a thickness of 10 *µ*m was deposited in the same manner as in Example 9 except that the number of vapor deposition was reduced. In order to render a positive electrode capacity consistent with a negative electrode capacity, the thickness of the positive electrode active material layer and the active material weight were changed to half of those in Example 9.

These positive electrodes and negative electrode were used to fabricate a battery in the same manner as in Example 1. This battery was referred to as Battery of Example 17.

### Example 18

Except that the thickness of the carbon layer comprising AB was made 1 *µ*m by varying the applied amount of the carbon paste, a battery was fabricated in the same manner as in Example 17 and referred to as Battery of Example 18.

### Example 19

Except that the thickness of the carbon layer comprising AB was made 2 *µ*m by varying the applied amount of the carbon paste, a battery was fabricated in the same manner as in Example 17 and referred to as Battery of Example 19.

### Example 20

Except that the thickness of the carbon layer comprising AB was made 5 *µ*m by varying the applied amount of the carbon paste, a battery was fabricated in the same manner as in Example 17 and referred to as Battery of Example 20.

### Example 21

Except that the thickness of the carbon layer comprising AB was made 10 *µ*m by varying the applied amount of the carbon paste, a battery was fabricated in the same manner as in Example 17 and referred to as Battery of Example 21.

### Example 22

Except that graphitized VGCF obtained by graphitizing vapor-phase growth carbon fiber at 2,800°C, with an average fiber diameter of 0.5 *µ*m, was used as a carbon material and the thickness of the carbon layer was made 2 *µ*m, a battery was fabricated in the same manner as in Example 17 and referred to as Battery of Example 22.

### Examples 23 to 26

As the carbon material, plural kinds of graphites with different forms were studied.

Herein, flake graphite (FG), spherical graphite, massive graphite (MAG) and fiber graphite were used. As the spherical graphite, graphitized mesocarbon microbeads (hereinafter referred to as MCMB) was used, and as the fiber graphite, graphitized mesocarbon fiber (hereinafter referred to as MCF) with a fiber diameter of 2 *µ*m was used. The flake, spherical and massive graphites, each having an average particle size of 1 to 3 *µ*m, were used.

A solution of NMP dissolving 4 parts by weight of polyvinylidene fluoride (PVdF) as a binder was kneaded with 100 parts by weight of each graphite to give a carbon paste. This carbon paste was applied on each face of a current collector sheet made of a copper foil with a thickness of 10 *µ*m, which was then dried at 60°C for 8 hours and rolled by pressure to form a carbon layer with a thickness of 5 *µ*m. At this time, the carbon layer had a graphite density of 1.2 g/cc.

A silicon monoxide film with a thickness of 10 *µ*m was deposited on the aforesaid sheet in the same manner as in Example 9 except that the number of vapor deposition was reduced. Except that the obtained negative electrode was used, a battery was fabricated in the same manner as in Example 17.

### Example 27

A battery was fabricated in the same manner as in Example 23, except that the binder in Example 23 was replaced by SBR (styrene butadiene rubber) as one of rubber type binders.

### Comparative Example 3

A silicon monoxide powder (SIO05BP, 90% particle size (D₉₀) of 75 *µ*m), produced by Kojundo Chemical Laboratory Co.,Ltd., was ground with a ball mill using zirconia beads.

First, the powder was roughly ground with beads having a diameter of 5 mm and further ground with beads having a diameter of 2 mm. As a result, a SiO powder with a particle size D₉₀ of 10 *µ*m was obtained. Except for the use of the above powder, a battery was fabricated in the same manner as in Comparative Example 2.

### Comparative Examples 4 to 5

A battery was fabricated in the same manner as in Comparative Example 2 except that, for a current collector sheet of the negative electrode, a nickel foil or an aluminum foil each having a thickness of 10 *µ*m was used in place of the copper foil.

### [Evaluation of battery]

### (A) Charge/discharge cycle life

At ambient temperature of 20°C, the battery was charged at a constant current of 7.2 mA until the battery voltage reached 4.2 V, and then stood still for 20 minutes, whereafter the battery was discharged at a discharge current of 7.2 mA until the battery voltage became 3.0 V, and this pattern of charging/discharging was repeated. A discharge capacity at 2nd cycle was regarded as an initial capacity of the battery. Such charge/discharge cycle was repeated 100 times, and a capacity retention ratio of the discharge capacity at 101st cycle to the initial capacity was calculated.

### (B) Safety

At an ambient temperature of 20°C, the battery was charged at a constant current of 7.2 mA until the battery voltage reached 4.2 V, and then stood still for 20 minutes, whereafter the battery was discharged at a discharge current of 7.2 mA until the battery voltage became 3.0 V, and this pattern of charging/discharging was repeated twice. Once charging at 3rd cycle was completed, in the state where the battery voltage had reached 4.2 V (fully charged state), the battery was taken out of the charge/discharge device. On a position 5 mm off the center of the side face of the battery in a fully charged state, an alumel-chromel thermocouple was fixed with a glass tape, which was then connected to a recorder. The battery with the thermocouple fixed thereon was placed on a heat insulating plate made of an alumina board, and a nail with a diameter of 1 mm was penetrated through almost the center of the side face of the battery. Thereafter, the temperature of the side face of the battery was measured with the aforesaid recorder to determine a maximum temperature.

Tables 1 and 2 show, regarding each battery, the initial capacity, the volummetric energy density, the capacity retention ratio after 100th cycle, and the maximum temperature of the side face of the battery in the safety test.

**Table 1**

| Ex. | Negative electrode structure | | | Battery characteristic | | | Safety |
|---|---|---|---|---|---|---|---|
| | SiOₓ thickness (*µ*m) | Metal of current collector sheet | Resin core layer | Initial capacity (mAh) | Volummetric energy density (Wh/dm³) | Capaccity retention ratio (%) | Max. temp. temp. (°C) |
| 1 | 20 | Cu | - | 44.3 | 186 | 90 | 38 |
| 2 | 10 | Cu | - | 22.1 | 134 | 93 | 36 |
| 3 | 5 | Cu | - | 11 | 86 | 94 | 27 |
| 4 | 3 | Cu | - | 6.6 | 58 | 96 | 23 |
| 5 | 0.5 | Cu | - | 1.1 | 11 | 98 | 23 |
| 6 | 10 | Ni | - | 23.0 | 140 | 93 | 35 |
| 7 | 30 | Cu | - | 62.2 | 200 | 78 | 43 |
| 8 | 10 | Al | - | 15.5 | 94 | 56 | 23 |
| 9 | 20 | Cu* | PET | 42.9 | 179 | 88 | 33 |
| 10 | 10 | Cu* | PET | 21.0 | 126 | 91 | 26 |
| 11 | 5 | Cu* | PET | 11.0 | 84 | 93 | 23 |
| 12 | 3 | Cu* | PET | 6.6 | 57 | 95 | 22 |
| 13 | 0.5 | Cu* | PET | 1.1 | 11 | 98 | 22 |
| 14 | 10 | Ni* | PET | 22.3 | 131 | 88 | 27 |
| 15 | 10 | Cu* | Polyimide | 22.1 | 133 | 92 | 26 |
| 16 | 10 | Cu* | Polypropylene | 19.4 | 116 | 68 | 26 |

| | | | | | | | |
|---|---|---|---|---|---|---|---|
| * Vapor deposition film. | | | | | | | |

**Table 2**

| Comp. Ex. | Negative electrode constituent | | | Battery characteristic | | | Safety |
|---|---|---|---|---|---|---|---|
| | *a | *b | Resin core layer | Initial capacity (mAh) | *c | capacity retention ratio (%) | Max. temp. (°C) |
| 1 | Carbon material | Cu | - | 29.4 | 123 | 90 | 55 |
| 2 | SiO Powder | Cu | - | 43.0 | 171 | 73 | 50 |
| 3 | SiO Powder | Cu | - | 42.5 | 162 | 78 | 53 |
| 4 | SiO Powder | Ni | - | 44.0 | 175 | 72 | 48 |
| 5 | SiO Powder | Al | - | 29.0 | 115 | 39 | 42 |

| | | | | | | | |
|---|---|---|---|---|---|---|---|
| *a: Negative electrode active material | | | | | | | |
| *b: Metal of current collector sheet | | | | | | | |
| *c: Volummetric energy density (Wh/dm³) | | | | | | | |

### (c) High rate characteristic

Batteries of Examples 17 to 27 were evaluated regarding a high rate characteristic. The high rate characteristic was calculated as a ratio of "a discharge capacity in the case of discharging at a current value of 36 mA (equivalent to 0.5 C)" to "a discharge capacity in the case of discharging at a current value of 7.2 mA (equivalent to 0.1 C)".

**Table 3**

| Ex. | *d | Metal | Carbon layer layer | Binder | *e | Initial capacity (mAh) | *f | *g | *h | Max. temp. (°C) |
|---|---|---|---|---|---|---|---|---|---|---|
| 17 | 10 | Cu | AB | PVdF10% | 0.5 | 22.1 | 134 | 90 | 96 | 38 |
| 18 | 10 | Cu | AB | PVdF10% | 1 | 22.1 | 133 | 92 | 97 | 38 |
| 19 | 10 | Cu | AB | PVdF10% | 2 | 22.1 | 133 | 95 | 97 | 39 |
| 20 | 10 | Cu | AB | PVdF10% | 5 | 22.1 | 130 | 95 | 96 | 42 |
| 21 | 10 | Cu | AB | PVdF10% | 10 | 22.1 | 127 | 94 | 94 | 46 |
| 22 | 10 | Cu | VGCF | PVdF4% | 5 | 24.9 | 147 | 97 | 98 | 38 |
| 23 | 10 | Cu | FG | PVdF4% | 5 | 25.3 | 149 | 90 | 95 | 43 |
| 24 | 10 | Cu | MCMB | PVdF4% | 5 | 25.1 | 148 | 91 | 94 | 42 |
| 25 | 10 | Cu | MAG | PVdF4% | 5 | 25.3 | 149 | 90 | 94 | 42 |
| 26 | 10 | Cu | MCF | PVdF4% | 5 | 25.1 | 148 | 93 | 94 | 45 |
| 27 | 10 | Cu | FG | SBR | 5 | 25.3 | 149 | 92 | 96 | 44 |
| 2 | 10 | Cu | None | None | - | 22.1 | 134 | 82 | 93 | 36 |

| | | | | | | | | | | |
|---|---|---|---|---|---|---|---|---|---|---|
| *d: SiOₓ thickness (*µ*m) | | | | | | | | | | |
| *e: Carbon layer thickness (*µ*m) | | | | | | | | | | |
| *f: Volummetric energy density (Wh/dm³) | | | | | | | | | | |
| *g: High rate characteristic (%) | | | | | | | | | | |
| *h: capacity retention ratio (%) | | | | | | | | | | |

In the case of Example 1, although the initial capacity is theoretically expected to be 73.5 mAh, the initial capacity of the battery using silicon monoxide has been reduced from the theoretical initial capacity by about 40%. The charge/discharge currents were both equivalent to 0.1 C with respect to the battery capacity, which were small enough with respect to the electrode thickness and the active material amount, and it is therefore thought that the aforesaid reduction in capacity depends on the irreversible capacity of silicon monoxide. However, the energy density of Battery of Example 1 is still higher than that of Battery of Comparative Example 1 using the carbon material as the negative electrode active material.

As shown in Table 1, when the thickness of the silicon monoxide film was 20 *µ*m or smaller, the capacity capacity retention ratio after 100 cycles equates to that of Battery of Comparative Example 1 using the carbon material. However, when the film thickness was larger than 20 *µ*m, the capacity retention ratio falls significantly. This is presumably because expansion of the volume of the silicon monoxide film associated with charging/discharging causes an increase in small holes in the active material layer, leading to a shortage of the non-aqueous electrolyte. This can be presumed from the fact that, when the battery internal resistances at the initial stage and after 100 cycles were measured, the internal resistance, especially on the imaginary part, was found to have increased.

When the thickness of the silicon monoxide film was smaller than 10 *µ*m, the volummetric energy density decreased to excess; this is attributed to the increase in ratio of battery constituent elements not being involved in the electric capacity to the active material amount. Herein, the thickness of the resin core layer was fixed to 10 *µ*m because the battery capacity retention ratio was to be taken into account; however, if a thin resin core layer with a thickness of not larger than 5 *µ*m is used, for example, the energy density can be improved to the level as high as that of Battery of Comparative Example 1 using the negative electrode that comprised the carbon material.

As shown in Table 1, the capacity retention ratio of the battery becomes higher as the silicon monoxide film becomes thinner. Although the smallest thickness of the silicon monoxide film here was 0.5 *µ*m, it is obvious that sufficient cycle life can be obtained even using a silicon monoxide film with a thickness smaller than 0.5 *µ*m, and the silicon monoxide film with a thickness smaller than 0.5 *µ*m may be considered as being sufficiently applicable if put into applications requiring not so large capacity.

In Comparative Example 2, there was exhibited very large deterioration in cycle life caused by the use of the silicon monoxide powder with a particle diameter D₉₀ of 75 *µ*m, instead of a deposition film of silicon monoxide. This is presumably because the particles constituting the powder is far larger than the particles constituting the deposition film, and is distorted due to expansion and shrinkage of the particles associated with charging/discharging, to cause cracking of the particles or deterioration in current collectivity. As opposed to this, in Comparative Example 3 where the particle size D₉₀ of the SiO powder was made as small as 10 *µ*m, compared to Comparative Example 2, the initial capacity and the volummetric energy density were slightly smaller and the capacity retention ratio and the maximum temperature were slightly higher. The decreases in initial capacity and volummetric energy density are presumably attributed to the fact that the small particle size caused deterioration in easiness in filling the SiO powder into the negative electrode. Further, the increases in capacity retention ratio and maximum temperature are presumably attributed to the increase in specific surface area of the SiO powder. At any rate, there are not totally large differences between Comparative Examples 2 and 3.

Next, the results of Comparative Example 4 where Ni was used as the current collector sheet in place of Cu hardly differed from the results obtained in using Cu. On the other hand, in Comparative Example 5 where Al was used in place of Cu, the overall battery characteristics deteriorated. This is the same tendency as that of Example 8, and presumably because Al was alloyed with lithium in charging, to be powdered so that the resistance increased.

The capacity retention ratio did not improve much even with the use of polyimide having higher strength than that of PET sheet as the resin core layer; however, in Example 16 where polypropylene with low strength was used, the capacity retention ratio decreased. This is presumably because the durability of polypropylene to the expansion and shrinkage of silicon monoxide associated with charging/discharging was insufficient and hence the resin core layer shrinks and expands to cause damage in the copper vapor deposition film that serves as the current collector. It is therefore desirable to choose a material with high tensile strength for the resin core layer. A resin core layer having a tensile strength of 20 MPa or more can be particularly preferably used because the flexibility thereof can serve to prevent damage in electron conductivity between the active materials. The effect of improving the capacity retention ratio by the resin core layer, which can cope with the expansion and shrinkage of the active material, can also be confirmed from the comparison among Examples 10, 15 and 16.

In terms of the current collector sheet of the negative electrode, the most favorable capacity retention ratio was obtained in the case of using copper; relatively favorable capacity retention ratios were obtained in Examples 6 and 14 where nickel was used. In Example 8 where aluminum was used, on the other hand, the capacity retention ratio decreased significantly. This is presumably because Al was alloyed with lithium in charging to be powdered so that the resistance increased. However, so long as charging is completed at a potential of the negative electrode not smaller than 0.4 V to lithium, it is possible to use Al for the current collector sheet of the negative electrode.

Moreover, it is obvious that the volumetric energy density increases employing this invention's negative electrode lithiated before fabrication of a battery or lithiated electrochemically in a battery after fabrication of the battery.

As a result of the safety test, it is understood that the safety improves significantly in the battery using the deposition film of silicon monoxide as compared to the battery using the silicon monoxide powder. With the same battery capacities, the maximum temperature of the side face of the battery is lower in the case of using the resin core layer than in the case of using metal foil with no resin core layer. Further, Batteries of Examples had the maximum temperatures lower than that of Battery of Comparative Example 1 by 10°C or more, revealing that those batteries are all excellent in safety. In the nail penetration test, since a short-circuit current keeps flowing between the positive and negative electrodes, chemical reaction heat or Joule heat is stored and the battery temperature rises; it is however considered that, when the resin core layer is used, it dissolves with Joule heat to impair electron conductivity, thereby suppressing further heating.

In comparison between Tables 2 and 3, the following are understood:
(a) When the battery comprises a carbon layer, the rate characteristic improves significantly compared to the case when the battery does not comprise the same.
(b) The larger the thickness of the carbon layer comprising AB, the more the rate characteristic improves (Comparative Examples 17 to 21).
(c) When the battery comprises the carbon layer, the capacity retention ratio tends to improve. This is presumably because the contact between the carbon layer and the current collector is favorable and thus the contact resistance between SiO and the current collector decreases. Normally, when charge/discharge cycles are repeated for a long period of time, an active material layer repeatedly expands and shrinks associated with charging/discharging to be peeled off from the current collector; however, it is considered that such peel-off can be reduced by using the carbon layer.
(d) With the use of graphite, a capacity increases because graphite itself is involved in charging/discharging of lithium. Further, with the use of graphite, though the capacity retention ratio after 100th cycle is slightly lower than that in the case of using a conductive material such as AB, it is still within the allowable range.
(e) The capacity retention ratio after 100th cycle improves more in using SBR than in using PVdF. Although details are unclear, it is understood that a rubber binder is more preferable than PVdF as a binder for the carbon layer (Examples 23 to 27).

Next, the x value in SiOₓ was considered.

### Examples 28 to 29

A negative electrode was produced in the same manner as in Example 1 except that, as low materials, a Si powder (SIE13PB, average particle size (diameter) of not larger than 10 *µ*m, purity of 4 N), produced by Kojundo Chemical Laboratory Co.,Ltd., was used simultaneously with the SiO powder instead of singly using the SiO powder.

Herein, the Si powder and the SiO powder were set in separate boats in a chamber, and heated independently to be vaporized at the same time. The heating temperature of each boat was controlled such that a deposition film comprising SiOₓ with an average x value of 0.7 or 0.9 could be obtained. It is to be noted that the x value was calculated using fluorescent X-ray diffraction analysis and the fundamental parameter method.

Except for the use of the negative electrode as thus obtained, batteries were fabricated in the same manner as in Example 1.

### Examples 30 to 31

A negative electrode was produced in the same manner as in Example 28 except that a minute amount of an oxygen gas was flown in the chamber during vacuum vapor deposition while keeping the degree of vacuum in the chamber at 10⁻⁴ Torr.

Herein, the heating temperature of each boat and the oxygen gas flow rate were controlled such that a deposition film comprising SiOₓ with an average x value of 1.1 or 1.3 could be obtained. It is to be noted that the x value was calculated using fluorescent X-ray diffraction analysis and the fundamental parameter method.

Except for the use of the negative electrode as thus obtained, batteries were fabricated in the same manner as in Example 1.

### Comparative Examples 6 to 7

A negative electrode was produced in the same manner as in Example 28 except that the heating temperature of each boat was controlled such that a deposition film comprising SiOₓ with an average x value of 0.3 or 0.5 could be obtained. It is to be noted that the x value was calculated using fluorescent X-ray diffraction analysis and the fundamental parameter method.

Except for the use of the negative electrode as thus obtained, batteries were fabricated in the same manner as in Example 1.

### Comparative Examples 8 to 9

A negative electrode was produced in the same manner as in Example 30 except that the heating temperature of each boat and the oxygen gas flow rate were controlled such that a deposition film comprising SiOₓ with an average x value of 1.5 or 1.7 could be obtained. It is to be noted that the x value was calculated using fluorescent X-ray diffraction analysis and the fundamental parameter method.

Except for the use of the negative electrode as thus obtained, batteries were fabricated in the same manner as in Example 1.

### Comparative Example 10

A negative electrode comprising a Si thin film was produced in the same manner as in Example 1 except that, as a low material, a Si powder (SIE13PB, purity of 4 N), produced by Kojundo Chemical Laboratory Co.,Ltd., was singly used instead of singly using the SiO powder.

Except for the use of the negative electrode as thus obtained, a battery was fabricated in the same manner as in Example 1.

### Comparative Example 11

A negative electrode comprising a SiO₂ thin film was produced in the same manner as in Example 1 except that, as a low material, a SiO₂ powder (SIO13PB, average particle size (diameter) of not larger than 600 *µ*m, purity of 5 N), produced by Kojundo Chemical Laboratory Co.,Ltd., was singly used instead of singly using the SiO powder.

Except for the use of the negative electrode as thus obtained, a battery was fabricated in the same manner as in Example 1.

### Comparative Example 12

A negative electrode was produced in the same manner as in Comparative Example 2 except that, as an active material, a Si powder (SIE13PB, purity of 4 N), produced by Kojundo Chemical Laboratory Co.,Ltd., was used in place of the silicon monoxide powder (SIO05BP, 90% particle size (D₉₀) of 75 *µ*m).

Except for the use of the negative electrode as thus obtained, a battery was fabricated in the same manner as in Example 1.

### Comparative Example 13

In the same manner as in Comparative Example 7, a deposition film comprising SiOₓ with an average x value of 0.5 was produced, and the step of scraping off the obtained thin film from the copper foil was repeated to obtain a required amount of a SiO_{0.5} powder. This SiO_{0.5} powder was crushed with a ball mill, and using the crushed powder, a negative electrode was produced in the same manner as in Comparative Example 2.

Except for the use of the negative electrode as thus obtained, a battery was fabricated in the same manner as in Example 1.

### Comparative Example 14

A negative electrode was produced in the same manner as in Comparative Example 2 except that, as an active material, the SiO powder (SIO15PB, average particle size of about 10 *µ*m), produced by Kojundo Chemical Laboratory Co.,Ltd., was used in place of the silicon monoxide powder (SIO05BP, 90% particle size (D₉₀) of 75 *µ*m). Except for the use of the negative electrode as thus obtained, a battery was fabricated in the same manner as in Example 1.

### Comparative Example 15

In the same manner as in Comparative Example 8, a deposition film comprising SiOₓ with an average x value of 1.5 was produced, and the step of scraping off the obtained thin film from the copper foil was repeated to obtain a required amount of a SiO_{1.5} powder. This SiO_{1.5} powder was ground with a ball mill, and using the ground powder, a negative electrode was produced in the same manner as in Comparative Example 2.

Except for the use of the negative electrode as thus obtained, a battery was fabricated in the same manner as in Example 1.

### Comparative Example 16

A negative electrode was produced in the same manner as in Comparative Example 2 except that, as an active material, a SiO₂ powder (SIO14PB, average particle size of about 1 *µ*m), produced by Kojundo Chemical Laboratory Co.,Ltd., was used in place of the silicon monoxide powder (SIO05BP, 90% particle size (D₉₀) of 75 *µ*m). Except for the use of the negative electrode as thus obtained, a battery was fabricated in the same manner as in Example 1.

Batteries of Examples 28 to 31 and Comparative Examples 6 to 16 were evaluated in the same manner as in Example 1.

Tables 4 and 5 show, regarding each battery, the initial capacity, the volummetric energy density, the capacity retention ratio after 100 cycles, the maximum temperature of the side face of the battery in the safety test and the high rate characteristic.

**Table 4**

| Ex. | SiOₓ | *i | Initial capacity (mAh) | *j | *k | Max. temp. (°C) | *l |
|---|---|---|---|---|---|---|---|
| Comp.6 | SiO_{0.3} | 20 | 53.4 | 207 | 77 | 41 | 57 |
| Comp.7 | SiO_{0.5} | 20 | 49.5 | 198 | 84 | 41 | 66 |
| 28 | SiO_{0.7} | 20 | 47.3 | 195 | 86 | 38 | 85 |
| 29 | SiO_{0.9} | 20 | 44.9 | 189 | 90 | 38 | 90 |
| 30 | SiO_{1.1} | 20 | 44.3 | 186 | 91 | 37 | 92 |
| 31 | SiO_{1.3} | 20 | 43.8 | 181 | 89 | 36 | 91 |
| Comp.8 | SiO_{1.5} | 20 | 41.2 | 174 | 88 | 36 | 70 |
| Comp.9 | SiO_{1.7} | 20 | 40.8 | 172 | 88 | 36 | 67 |
| Comp.10 | Si | 20 | 81 | 335 | 65 | 43 | 43 |
| Comp.11 | SiO₂ | 20 | 0 | 0 | - | - | - |

| | | | | | | | |
|---|---|---|---|---|---|---|---|
| *i: SiOₓ thickness (*µ*m) | | | | | | | |
| *j: Volummetric density (Wh/dm³) | | | | | | | |
| *k: Capacity retention ratio (normal) (%) | | | | | | | |
| *l: Capacity retention ratio (deep discharge characteristic) (%) | | | | | | | |

**Table 5**

| Comp. Ex. | Active material | Initial capacity (MAh) | Volummetric Energy density (Wh/dm3) | *m | Max. temp. (°C) | *n |
|---|---|---|---|---|---|---|
| 12 | Si | 77.2 | 295 | 60 | 57 | 31 |
| 13 | SiO_{0.5} | 45.3 | 170 | 72 | 54 | 52 |
| 14 | SiO | 42.5 | 162 | 78 | 53 | 61 |
| 15 | SiO_{1.5} | 38.7 | 145 | 75 | 50 | 36 |
| 16 | SiO₂ | 0 | 0 | - | - | - |

| | | | | | | |
|---|---|---|---|---|---|---|
| *m: Capacity retention ratio (normal) (%) | | | | | | |
| *n: Capacity retention ratio (deep discharge characteristic) (%) | | | | | | |

Further, each battery was subjected to evaluation regarding a deep discharge characteristic. Herein, model batteries were fabricated using the respective negative electrodes produced in Examples 28 to 31 and Comparative Examples 6 to 16 as working electrodes in order to further clarify the characteristic of the deposition film comprising SiOₓ. As a counter electrode facing the working electrode used was an electrode obtained by attaching a lithium foil with dimensions of 37 × 37 mm and a thickness of 150 *µ*m to a copper plate. A nickel-made lead had been previously connected to the copper plate.

Except that the aforesaid working electrode and counter electrode are opposed to each other via a separator, model batteries were fabricated in the same manner as in Example 1.

In evaluating the deep discharge characteristic, such charging/discharging as follows were repeated:

First, at an ambient temperature of 20°C, each battery was charged at a constant current of 7.2 mA until the battery voltage becomes 0 V, and then stood still for 20 minutes, whereafter the battery was discharged at a discharge current of 7.2 mA until the battery voltage became 1.5 V. This pattern of charging/discharging was repeated three times.

"Charging" referred to here means movement of Li to the working electrode, and hence the potential of the working electrode decreases due to charging.

Thereafter, while keeping the ambient temperature and the charge/discharge currents unchanged from the above, the battery was charged to the battery voltage of 0 V and then discharged to the battery voltage of 3.0 V, and such a charge/discharge cycle was repeated 50 times. A retention ratio of a discharge capacity at 50th cycle to a discharge capacity at 1st cycle was regarded as a deep discharge characteristic. The results were shown in Tables 4 and 5.

In Tables 4 and 5, when SiO₂ was used, there was observed no initial capacity. Therefore, no evaluations were carried out in terms of the capacity retention ratio after 100 cycles, the maximum temperature of the side face of the battery in the safety test, the high rate characteristic and the deep discharge characteristic.

As apparent from Table 4, when SiOₓ with an x value of 0.7 to 1.3, especially of 0.9 to 1.3, was used, the deep discharge characteristic was particularly excellent and the high retention ratio was exhibited in all the cases. On the other hand, when the x value is smaller than 0.7 or larger than 1.3, the deep discharge characteristic significantly deteriorated and the retention ratio dropped in all the cases. These results indicate that the use of SiOₓ with the x value in the range of 0.7 to 1.3, especially of 0.9 to 1.3, allows fabrication of a battery having a specifically excellent deep discharge characteristic.

These results were obtained presumably because:

When the x value in SiOₓ is 0.7 to 1.3, it is considered that the O-Li bond has been formed in addition to the Si-O bond, in a charged state where Li has been inserted into SiOₓ. Out of the aforesaid bonds, the O-Li bond is relatively strong and Li is less prone to being released from the O-Li bond even when deep-discharging is conducted until a SiOₓ potential becomes 3.0 V relative to metal Li. Accordingly, even when charging/deep-discharging were repeated, the degrees of expansion and shrinkage hardly differ from those in normal charging/discharging, and therefore a relatively favorable cycle characteristic can be obtained.

When the x value is from 0.9 to 1.3, in particular, the cycle characteristic in the case of repeating charging/deep-discharging is favorable. This is due presumably to existence of many O-Li bonds.

When the x value in SiOₓ is smaller than 0.7, on the other hand, O exists in a small amount and the O-Li bonds therefore exists in relatively a small amount, whereby Li is relatively easily released. Especially when x = 0, namely in using Si, no O-Li bond exists. When charging/deep-discharging are repeated, therefore, the active material expands and shrinks more actively than in normal charging/discharging, to cause collapse of the deposition film, or the like, resulting in a significantly lowered cycle characteristic.

Further, when the x value in SiOₓ is larger than 1.3, the Si-O bond is very strong, and it is therefore considered that the Li-O bond is less prone to being formed, or even when formed, it may be a very weak bond. Li is thus apt to be released from SiOₓ, and when charging/deep-discharging are repeated, the active material expands and shrinks more actively than in normal charging/discharging, as in the case where the x value is smaller than 0.7. It is to be noted that, presumably, almost no Li-O bond is formed when SiO₂ is used.

Next, in the case of the active material layer formed by preparing a paste that included an active material powder and a binder, applying this paste on a copper foil, and then drying the applied paste, the cycle characteristic, obtained when charging/deep-discharging were repeated, totally deteriorated more than in using the deposition film. Further, even when the x value of the active material powder varied, there was no significant change in the cycle characteristic in the case of repeating charging/deep-discharging.

This is presumably because, when the electrode using the active material powder is used, the particle cracks or collapses due to expansion and shrinkage thereof in charging/discharging, or the electric resistance of the electrode increases due to weaken contact between the particles in the active material layer. This tendency is observed also in the normal charge/discharge cycles, and thus not specific to the case of repeating charging/deep-discharging. It is therefore thought that the cycle characteristic in the case of repeating charging/deep-discharging did not exhibit a significant change associated with the variations in the x value of the active material powder. It is found from the above that the x value in SiOₓ has a great effect on the characteristics of the deposition film and that such effect is specific to the deposition film.

By applying the present invention to a negative electrode for a non-aqueous electrolyte secondary battery, comprising a current collector sheet and an active material layer deposited on the surface of the current collector sheet, where the active material layer does not include a binder, it is possible to fabricate a non-aqueous electrolyte secondary battery with high capacity, long cycle life and excellent safety, which exhibits an excellent cycle characteristic even when charging/deep-discharging are repeated.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A negative electrode for a non-aqueous electrolyte secondary battery, comprising a current collector sheet and an active material layer deposited on the surface of said current collector sheet, wherein said active material layer comprises SiOₓ satisfying: 0.7 ≦ x ≦ 1.3, and does not include a binder.

2. The negative electrode in accordance with claim 1, wherein said current collector sheet comprises a metal foil.

3. The negative electrode in accordance with claim 2, wherein the surface of said metal foil is coated with a layer comprising a carbon material.

4. The negative electrode in accordance with claim 3, wherein said carbon material is at least one selected from the group consisting of carbon black and graphite.

5. The negative electrode in accordance with claim 4, wherein said carbon black is at least one selected from the group consisting of acetylene black and ketjen black.

6. The negative electrode in accordance with claim 4, wherein said graphite is at least one selected from the group consisting of flake graphite, spherical graphite, massive graphite and fiber graphite.

7. The negative electrode in accordance with claim 1, wherein said current collector sheet comprises a resin core layer and a metal layer coating the surface of said resin core layer.

8. The negative electrode in accordance with claim 2, wherein said metal is at least one selected from the group consisting of gold, silver, copper, iron, nickel, zinc and aluminum.

9. The negative electrode in accordance with claim 7, wherein said metal is at least one selected from the group consisting of gold, silver, copper, iron, nickel, zinc and aluminum.

10. The negative electrode in accordance with claim 7, wherein said resin core layer comprises at least one selected from the group consisting of polyethylene terephthalate, polycarbonate, an aramid resin, a polyimide resin, a phenol resin, a polyether sulfone resin, a polyether ether ketone resin and a polyamide resin.

11. The negative electrode in accordance with claim 7, wherein said resin core layer has a tensile strength of 20 MPa or more.

12. The negative electrode in accordance with claim 7, wherein said resin core layer has a thickness of not smaller than 3 *µ*m and not larger than 100 *µ*m.

13. The negative electrode in accordance with claim 1, wherein said active material layer has a thickness of not smaller than 0.5 *µ*m and not larger than 20 *µ*m.

14. A secondary battery comprising: a positive electrode; a non-aqueous electrolyte; and the negative electrode in accordance with claim 1.

15. A method for producing a negative electrode for a non-aqueous electrolyte secondary battery, including the step of:
depositing SiOₓ that satisfies: 0.7 ≦ x ≦ 1.3, on a current collector sheet by vapor deposition, to form an active material layer.

16. The production method in accordance with claim 15, wherein said current collector sheet comprises a metal foil.

17. The production method in accordance with claim 16, wherein the surface of said metal foil is coated with a layer comprising a carbon material.

18. The production method in accordance with claim 17, wherein said carbon material is at least one selected from the group consisting of carbon black and graphite.

19. The production method in accordance with claim 18, wherein said carbon black is at least one selected from the group consisting of acetylene black and ketjen black.

20. The production method in accordance with claim 18, wherein said graphite is at least one selected from the group consisting of flake graphite, spherical graphite, massive graphite and fiber graphite.

21. The production method in accordance with claim 15, wherein said current collector sheet comprises a resin core layer and a metal layer coating the surface of said resin core layer.

22. The production method in accordance with claim 16, wherein said metal is at least one selected from the group consisting of gold, silver, copper, iron, nickel, zinc and aluminum.

23. The production method in accordance with claim 21, wherein said metal is at least one selected from the group consisting of gold, silver, copper, iron, nickel, zinc and aluminum.

24. The production method in accordance with claim 21, wherein said resin core layer comprises at least one selected from the group consisting of polyethylene terephthalate, polycarbonate, an aramid resin, a polyimide resin, a phenol resin, a polyether sulfone resin, a polyether ether ketone resin and a polyamide resin.

25. The production method in accordance with claim 21, wherein said resin core layer has a tensile strength of 20 MPa or more.

26. The production method in accordance with claim 21, wherein said resin core layer has a thickness of not smaller than 3 *µ*m and not larger than 100 *µ*m.

27. The production method in accordance with claim 15, wherein said active material layer has a thickness of not smaller than 0.5 *µ*m and not larger than 20 *µ*m.
